# EUROPEAN PATENT APPLICATION

(11) **EP 2 591 911 A1**
(43) Date of publication of application: **15.05.2013**
(21) Application number: 12007617.9
(22) Date of filing: 09.11.2012
(51) Int. Cl.: B29C 70/38, B29C 70/88

(54) **A method for the automated manufacture of a fibre composite component with integrated lightning protection, and also a fibre composite component**

(30) Priority: 10.11.2011 DE 102011086101; 10.11.2011 US 201161557944 P
(71) Applicant: Airbus Operations GmbH, 21129 Hamburg (DE)
(72) Inventor: De Jong, Claas, 21129 Hamburg (DE); Kaste, Michael, 21129 Hamburg (DE); Fastert, Claus, 21129 Hamburg (DE); Fideu, Paulin, 21129 Hamburg (DE); Seegel, Hauke, 21129 Hamburg (DE)
(74) Representative: Marschall, Stefan

(57) **Abstract**

The invention concerns a method for the automated manufacture of a fibre composite component, in particular a shell module of an aircraft, with integrated lightning protection 20, wherein the fibre composite component is formed with a fibre composite plastic, in particular with a thermosetting fibre composite plastic, comprising the steps:
a) the automated laying down of a ribbon-form pre-preg material 10 or dry ribbon-form reinforcing fibre strands onto a positive mould 14, and then in at least some regions the automated laying down of an essentially ribbon-form lightning protection material 16 onto the pre-preg material 10 or the reinforcing fibre strands,
or in at least some regions the automated laying down of the ribbon-form lightning protection material 16 on a negative mould 30, and then in at least some regions the automated laying down of the ribbon-form pre-preg material 10 or the dry ribbon-form reinforcing fibre strands onto the positioned lightning protection material 16, including regions of the negative mould 30 remaining free of the lightning protection material, and
b) the curing of the laminate construction formed with the pre-preg material 10 and with the lightning protection material 16 to form the fibre composite component,
or the infiltration of the dry reinforcing fibre strands with a plastic, in particular with a thermosetting plastic, and the subsequent curing of the laminate construction formed with the infiltrated reinforcing fibre strands and the lightning protection material to form the fibre composite component.

Furthermore the invention concerns a fibre composite component with integrated lightning protection 20 manufactured, in particular, in accordance with the method.

## Description

The invention concerns a method for the automated manufacture of a fibre composite component, in particular a shell module of an aircraft, with integrated lightning protection, wherein the fibre composite component is formed with a fibre composite plastic, in particular with a thermosetting fibre composite plastic.

In modern aircraft construction components that are manufactured with fibre-composite plastics are widely deployed. In the structural regions of aviation vehicles carbon fibre-reinforced thermosetting plastics are primarily deployed, wherein carbon fibre-reinforced thermoplastic high-performance plastics are also encountered to some extent. Furthermore other reinforcing fibres, such as, for example, glass fibres, Kevlar^{®} fibres, or Aramid^{®} fibres, can be deployed. With the deployment of fibre composite plastics a considerable potential for weight saving ensues; amongst other factors this leads to increased ranges by virtue of reduced fuel consumption. Furthermore in comparison to the metallic materials, in particular the aluminium alloys, for a long time customary in aircraft construction, plastic materials have excellent corrosion and fatigue resistance, as a result of which the servicing and maintenance effort can be significantly reduced in the operation of such aircraft.

By virtue of the generally significantly lower electrical conductivity of the fibre composite plastics compared with metallic materials, additional measures must be taken, in particular for lightning protection and earth return paths for the on-board electrical systems. The earth return paths are achieved, for example, by means of additional copper lines with large cross-sections, while the lightning protection is achieved by means of metals integrated into the external surfaces of the structural components. At the present time structural components, such as, for example, shell modules for fuselage sections, are often produced with the aid of the so-called AFP-method ("Automated Fibre Placement"). Here a so-called pre-preg material is laid down in an automated manner by means of a suitable device on a form-defining moulding tool in various spatial directions, until the fibre composite component that is being manufactured has achieved a prescribed material thickness in all regions. The pre-preg material takes the form of reinforcing fibre bundles or strands, in particular carbon fibre strands, which are pre-impregnated by the manufacturer with a curable artificial thermosetting resin. In the procedures of previous known art the lightning protection is manually applied after the pre-preg material has been laid down. For this purpose a ribbon-form copper foil with a high width of, for example, 889 mm (35") is laid down and pressed down on the pre-preg material in the form of overlapping widths. With the application of pressure and/or temperature, for example by means of a vacuum bag procedure in an autoclave, the construction is then cured to form the finished fibre composite component. A major disadvantage of this procedure of previous known art lies in the high level of manual work content, which, amongst other features, leads to high production costs.

The object of the invention is therefore to specify a method that allows fully automated manufacture of a fibre composite component with integrated lightning protection. Furthermore it is an object of the invention to create a fibre composite component with lightning protection that has been manufactured in accordance with the method.

The inventive object is firstly achieved by means of a method in accordance with Claim 1 with the following steps in the method:
a) The automated laying down of a ribbon-form pre-preg material or dry ribbon-form reinforcing fibre strands on a positive mould and then in at least some regions the automated laying down of an essentially ribbon-form lightning protection material onto the pre-preg material or the reinforcing fibre strands,
   or, in at least some regions, the automated laying down of the ribbon-form lightning protection material on a negative mould and then, in at least some regions, the automated laying down of the ribbon-form pre-preg material or the dry ribbon-form reinforcing fibre strands onto the positioned lightning protection material, including regions of the negative mould remaining free of the lightning protection material, and
b) the curing of the laminate construction formed with the pre-preg material and with the lightning protection material to form the fibre composite component,
   or the infiltration of the dry reinforcing fibre strands with a plastic, in particular with a thermosetting plastic, and the subsequent curing of the laminate construction formed with the infiltrated reinforcing fibre strands and the lightning protection material to form the fibre composite component.

By this means it is possible to produce a fibre composite component, in particular from a thermosetting fibre composite plastic with integrated lightning protection, fully automatically on the same laying machine that is also used for the laying down of load-bearing pre-preg material, or dry reinforcing fibre strands. The method can be executed in its two (main) variants - with either a positive mould or a negative mould, wherein the sequence for the laying down of the ribbon-form pre-preg material and the ribbon-form lightning protection material is reversed depending upon the type of mould deployed.

The method is preferably executed with a ribbon-form pre-preg material. Alternatively, however, dry ribbon-form reinforcing fibre strands can also be used, which, at the point in time at which they are being processed, are not yet pre-impregnated with a plastic. For the case in which a ribbon-form pre-preg material is deployed - i.e. in particular, ribbon-form reinforcing fibre strands pre-impregnated with a curable thermosetting plastic - the laminate construction can be cured immediately after the completion of the laying down process. For the case in which dry, ribbon-form reinforcing fibre strands are firstly laid down in an automated manner, after the completion of the laying down process, in an intermediate step within step b) of the method, these must firstly be infiltrated, i.e. impregnated, with a plastic, in particular with a thermosetting plastic, with the aid of a suitable device. The infiltrated laminate construction, including the ribbon-form lightning protection material therein integrated, is then cured to form the finished fibre composite component - as in the case of the pre-preg material.

In the event of the deployment of a positive mould, in accordance with the first variant of the method, in step a) of the method the pre-preg material is firstly laid down in an automated manner on the positive mould, until the fibre composite component that is being manufactured has achieved a prescribed design thickness in all zones. The lightning protection material is then likewise laid down in an automated manner, in at least some regions, onto the pre-preg material that is already in position. In place of the pre-preg material dry reinforcing fibre strands can also be used.

In the case of the second variant of the method in step a) of the method the lightning protection material is firstly laid down on the negative mould, and only after this is the pre-preg material applied onto the lightning protection material that is already laid down. Here too dry ribbon-form reinforcing fibre strands can also be laid down in an automated manner in place of the pre-preg material.

In step b) of the method the curing of the laminate construction formed with the pre-preg material and the lightning protection material is undertaken so as to form the fibre composite component, If instead of the pre-preg material dry reinforcing fibre strands are deployed, in an intermediate step within step b) of the method, the impregnation, i.e. the infiltration, of the dry reinforcing fibre strands is firstly undertaken with a plastic, in particular with a curable thermosetting plastic.

The laying down of the ribbon-form pre-preg material, or the ribbon-form reinforcing fibre strands, and the lightning protection material, is preferably undertaken in a fully automated manner without the need for any manual intervention from the external environment. By this means a cost-optimised production process ensues, which is also a high volume process, with at the same time a high level of process reliability, which leads to reliably reproducible production results, in particular with regard to dimensional stability and the electrical properties of the fibre composite components manufactured in this manner. The lightning protection constructed with the ribbon-form lightning protection material always lies in an external region of the later fibre composite component, i.e. in a region, which, for example, in the case of applications within an aircraft structure, faces towards the external environment of the vehicle (the atmosphere).

In an advantageous configuration of the method provision is made that a width of the pre-preg material, or the dry reinforcing fibre strands, essentially corresponds to a width of the lightning protection material, wherein the width of the pre-preg material, or the dry reinforcing fibre strands, and also that of the lightning protection material, lies between 1 mm and 100 mm.

As a consequence of the equal width of the pre-preg material, or the dry reinforcing fibre strands, and the lightning protection material, both materials can be processed on the same laying machine. Here a preferred width is e.g. 6.35 mm = 1/4". Other current width dimensions, such as, for example, 1/8", 1/2", 1" and 2" etc., are likewise possible, depending upon the surface geometry of the fibre composite component that is being manufactured. The significantly lesser width of the lightning protection material that is here being applied, in comparison to conventional lightning protection material, allows an optimised matching to a surface geometry with, in particular, small radii of curvature.

In a further development of the method provision is made that the laying down of the pre-preg material, the dry reinforcing fibre strands, and also the lightning protection material is in each case undertaken by means of the same laying machine.

By this means a significant increase in the efficiency of the production process ensues. The device preferably takes the form of a laying machine that is suitable for the AFP-method or the DFP-method (Dry Fibre Placement).

In accordance with a further configuration of the method the pre-preg material is formed with a carbon fibre-reinforced, thermosetting plastic and the essentially dry reinforcing fibre strands are formed with carbon fibres.

By this means recourse can be made to semi-finished products of known art in the laying down process of the load-bearing structural part of the fibre composite component.

In accordance with a further advantageous configuration of the method the ribbon-form lightning protection material is formed with at least one metal strip, in particular with at least one copper strip, of low material thickness, embedded in a resin.

By this means conventional laying machines can at the same time be shared for use in the construction of the lightning protection. The at least one metal strip, e.g. the at least one copper strip (in particular a woven copper strip, a copper foil strip, or a perforated or slitted or stamped copper foil strip) has a low material thickness of less than 0.3 mm, which preferably approximately corresponds with a material thickness of the pre-preg material or the dry reinforcing fibre strands. By virtue of the fact that the lightning protection material, at the point in time at which it is laid down, is embedded into an adhesive resin that is not yet cured, a reliable fixing of location of the lightning protection material ensues during the laying down process.

Furthermore the inventive object is achieved by means of a fibre composite component in accordance with one of the Claims 6 to 9, which in particular is manufactured in accordance with the specification of the inventive method.

In accordance with the invention the lightning protection is constructed with a ribbon-form lightning protection material.

By this means a simplified manufacturing process for the fibre composite component ensues, which essentially does not include any manual operations.

In a further development of the fibre composite component provision is made that the ribbon-form lightning protection material is formed with at least one metal strip, in particular with at least one copper strip, of low material thickness, embedded into a resin.

By this means the conventional laying machines that are deployed in the manufacture of the load-bearing structural part of the fibre composite component can also be deployed for the build-up of the lightning protection, by the laying down of material in layers.

In accordance with an advantageous configurations of the fibre composite component the at least one metal strip has a width of between 1 mm and 100 mm.

Amongst other features, a simpler build-up of the lightning protection in regions of the fibre composite component with a strongly curved surface geometry is possible by this means. A preferred width of the ribbon-form lightning protection material is e.g. 6.35 mm = 1/4"; this corresponds to a standard width of the pre-preg material that commonly finds application in the laying down process.

In accordance with an advantageous further development of the fibre composite component the metal strips in at least some regions run in parallel spaced apart, abutting one another and/or overlapping one another.

By this means a highly effective form of lightning protection is created, whose protective effect against external high-voltage discharges is at least comparable to that of a form of lightning protection embodied in a conventional manner. A conventional, extensive form of lightning protection is generally constructed with a multiplicity of lightning protection material webs of large width (e.g. 889 mm = 35"), laid down manually next to one another.

In the drawings:
- Fig. 1: shows the laying down of a ribbon-form pre-preg material on a positive mould in the course of the first variant of the method,
- Fig. 2: shows the laying down of a ribbon-form lightning protection material on the positioned pre-preg material in the context of the first variant of the method,
- Fig. 3: shows the laying down of a ribbon-form lightning protection material on a negative mould in the course of the second variant of the method, and
- Fig. 4: shows the laying down of the pre-preg material on the already laid-down ribbon-form lightning protection material in the context of the second variant of the method.

In the drawings the same design elements have the same reference numbers in each case.

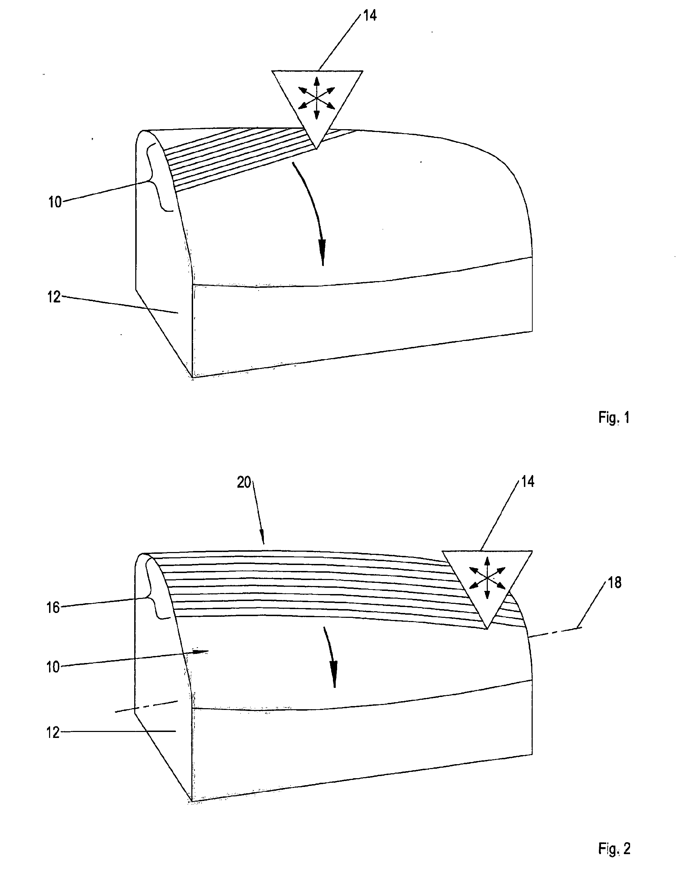

Fig. 1 illustrates in a schematic representation the laying down of a ribbon-form pre-preg material on a positive mould in the course of the first variant of the method, Here both a ribbon-form pre-preg material and also dry, non-impregnated, ribbon-form reinforcing fibre strands can be used. The method is described under the premise of the deployment of a ribbon-form pre-preg material.

In accordance with the first variant of the method, in step a) of the method a ribbon-form pre-preg material 10 is preferably firstly laid down successively - e.g. in the direction of the undesignated black arrow, represented with a thick line - on a positive mould 12 by means of an automated laying machine 14, not represented in any further detail, until the prescribed material thickness and geometry of the later fibre composite component are achieved. The positive mould 12 defines the later geometrical shape of the fibre composite component. A shell module can, for example, be manufactured by means of the positive mould 12 shown in Fig. 1. At least two such shell modules are joined together to form a fuselage section; these sections can be aligned one behind another and connected to form a complete fuselage cell of an aircraft. During the laying down process the laying machine 14 moves freely in space, wherein the pre-preg material 10 is preferably positioned in a load-optimised direction on the positive mould 12. The ribbon-form pre-preg material 10 preferably takes the form of reinforcing fibre carbon fibre strands or bundles, which are impregnated by the manufacturer with a curable thermosetting plastic, such as, for example, an epoxy resin, a polyester resin, a phenol resin, or a BMI resin. By virtue of the pre-impregnation with a thermoplastic plastic that is not yet cured at this point in time, the pre-preg material 10 is slightly adhesive at the time at which it is laid down, so that no fixing of location on the positive tool 12 is necessary. The ribbon-form pre-preg material has a width of between 1 mm and 100 mm. The pre-preg material is preferably deployed with a width of 1/8", 1/4", 1/2", 1", or 2", since the conventional laying machines 14 are normally equipped for the processing of pre-preg material with these (standard) widths.

Fig. 2 illustrates the automated laying down of a ribbon-form lightning protection material 16 on the pre-preg material 10 already fully positioned on the positive mould 12, in the context of the first variant of the method,

In accordance with the invention the laying down of the ribbon-form lightning protection material 16 is undertaken by means of the same laying machine 14 with which the pre-preg material 10 has firstly been laid down on the positive mould 12. In order to make this possible, the lightning protection material 16 has, in particular, the same width as the pre-preg material 10. Also the material thickness of the lightning protection material 16 should approximately correspond with the material thickness of the pre-preg material 10. The ribbon-form lightning protection material 16 is formed with at least one metal strip embedded in a resin. The metal strip itself can be produced from copper, from a copper alloy or from another metal, or metal alloy, with good electrical conductivity. The resin in which the metal strip is to be embedded can, for example, be formed with a curable epoxy resin, or with a comparable curable thermosetting resin system. For purposes of encasing the metal strip the same resin can be used as that which also forms the matrix in the pre-preg material, i.e. is used for the infiltration of the dry reinforcing fibre strands. As a consequence of the encasement with the resin, which at the point in time of laying down is soft and at least still slightly adhesive, i.e. the embedding in the latter, in conjunction with the pre-preg material 10, which for its part is still sticky, no additional fixing of location is necessary for the laid down lightning protection material 16. A material thickness of the metal strips, i.e. the copper strips, is usually up to 0.3 mm. Alternatively, for example, a multiply slitted and subsequently expanded copper strip can also be deployed.

The lightning protection material 16 is laid down parallel to a longitudinal axis 18 of the aircraft successively - for example in the direction of the black arrow represented with a thick line. In the example of embodiment shown the copper strips, not individually designated, are in each case running parallel to one another and are positioned abutting one another. In a deviation from this, in particular as a function of a locally varying radius of curvature of the spatial geometry of the fibre composite component, i.e. of the positive mould 12, the copper foil strips can also in at least some regions run in parallel spaced apart and/or overlapping one another on the pre-preg material 10. In the case in which the copper foil strips are laid down parallel to one another and spaced apart a lattice-type structure for the lightning protection ensues. On this lattice-type structure a further lattice of copper foil strips can, if necessary, be arranged at an angle of, for example, 90°, or less. The ribbon-form lightning protection material 16, e.g. the copper foil strips, form in their totality a highly effective form of lightning protection 20 against atmospheric high-voltage discharges that impinge on the fibre composite component. Here it is not necessary for the lightning protection 20 to extend over the pre-preg material 10 completely. A build-up of the lightning protection in just some regions with reference to a total exterior surface of the fibre composite component can be sufficient in individual cases.

In principle the ribbon-form lightning protection material 16, e.g. the copper foil strips, can be laid down in any kind of geometrical spatial arrangement (with a periodic or an aperiodic pattern) on the pre-preg material 10. In the case of the positive mould 12 that is here form-defining, the lightning protection 20 always lies in an undesignated region of the positive mould 12 that is remote from the mould.

In step b) of the method the curing of the laminate construction formed from the pre-preg material 10 and the ribbon-form lightning protection material 16 is undertaken so as to form the fibre composite component. Here the ribbon-form lightning protection material 16 and the ribbon-form pre-preg material 10 are baked into an insoluble compact unit. The curing of the pre-preg material 10 and the lightning protection material 16 is undertaken, for example, by means of a conventional build-up of vacuum in an autoclave with the application of pressure and/or temperature. Before the curing process further components such as, for example, stiffening elements (stringers, frames, clips, attachment fittings) can, if necessary, also be integrated into the laminate construction.

Alternatively, instead of the ribbon-form pre-preg material 10 dry, reinforcing fibre strands or bundles that have not been pre-impregnated, such as, for example, carbon fibre rovings, glass fibre strands, Kevlar^{®} fibres, aramid^{®} fibres, or similar, can also be deployed. In order to ensure the necessary fixing of the location of the positioned reinforcing fibres during the laying down process, these are provided in at least some regions with a thermoplastic plastic that can be fused slightly so as to act as an adhesive. Alternatively the fixing of location can be undertaken by means of a sewing process. In the case of this alternative of the method there takes place, in an intermediate step within step b) of the method, the infiltration, i.e. the impregnation, of the reinforcing fibres, preferably with a curable thermosetting plastic, such as, for example, an epoxy resin, with the aid of a suitable device, e.g. a moulding tool provided for this purpose. Only then can the curing process be undertaken.

For the case in which dry reinforcing fibres are deployed, the infiltration of the reinforcing fibres can also be undertaken with a plasticised thermoplastic high-performance plastic in a suitable mould, wherein the curing in step b) of the method is then undertaken in the form of a cooling process.

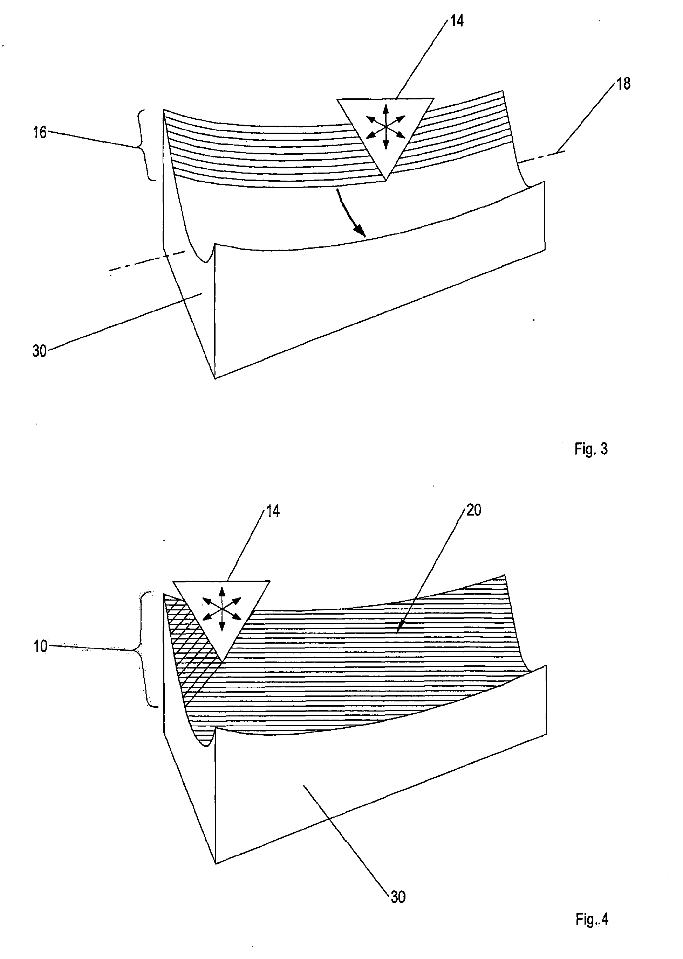

Figs. 3 and 4, to which reference is made jointly in the further course of the description, show the sequence of the second variant of the method using a negative mould, with a reversed laying down sequence of pre-preg material, or dry reinforcing fibre strands, and lightning protection material. This variant of the method is described in more detail also under the premise that a ribbon-form pre-preg material is preferably deployed.

In contrast to the first variant of the method here the ribbon-form lightning protection material 16 is firstly laid down in an automated manner by means of the laying machine 14 on a form-defining negative mould 30. The automated laying down of the lightning protection material 16 is undertaken, for example, in the direction of the black arrow represented with a thick line, in each case in webs parallel to the longitudinal axis 18 of the aircraft. The ribbon-form pre-preg material 10 is then laid down onto the ribbon-form lightning protection material 16 that has already been laid down. In this variant of the method the ribbon-form lightning protection material is always laid down on the negative mould 30 close to the mould, so that it is in immediate contact with the undesignated, form-defining surface of the negative mould 30. From this a high surface quality ensues for the lightning protection 20 constructed from the ribbon-form lightning protection material 16, which generally renders laborious mechanical rework operations superfluous. The laying down of the lightning protection material 16, and also the curing of the laminate construction formed with the lightning protection material 16 and the pre-preg material 10, is undertaken in a subsequent step b) of the method in an analogous manner to the first variant of the method. With regard to the further details reference is therefore made to the description of the otherwise similarly sequencing first variant of the method in accordance with Figs. 1, 2.

The inventive method allows fibre composite components curved in at least one dimension to be manufactured in a fully automatic manner with integrated lightning protection. Manual operations are no longer required. For purposes of manufacturing the integrated lightning protection 20 a ribbon-form lightning protection material 16 is used, which can advantageously be processed on the same laying machine 14, by means of which the load-bearing structural parts of the fibre composite component can also be laid down with the ribbon-form pre-preg material and/or with dry reinforcing fibre strands on a positive or a negative mould. By this means it is for the first time possible to manufacture the structural parts and also the lightning protection for the fibre composite component on the same laying machine and also on the same production station, in the ideal case in a fully automatic manner.

For the case in which dry, ribbon-form, reinforcing fibre strands are processed in an alternative to the ribbon-form pre-preg material, the curing of the laminate construction is also undertaken in this variant of the method only after impregnation, i.e. infiltration, of the dry reinforcing fibres with a plastic, in particular with a thermosetting plastic, in an intermediate step within step b) of the method.

### Reference symbol list

10. Prepreg material
12. Positive mould
14. Laying machine
16. Lightning protection
18. Longitudinal axis (aircraft)
20. Integrated lightning protection
30. Negative mould

## Claims

1. A method for the automated manufacture of a fibre composite component, in particular a shell module of an aircraft, with integrated lightning protection (20), wherein the fibre composite component is formed with a fibre composite plastic, in particular with a thermosetting fibre composite plastic, comprising the steps:
a) the automated laying down of a ribbon-form pre-preg material (10) or dry ribbon-form reinforcing fibre strands, onto a positive mould (14), and then in at least some regions the automated laying down of an essentially ribbon-form lightning protection material (16) onto the pre-preg material (10) or the reinforcing fibre strands,
or, in at least some regions, the automated laying down of the ribbon-form lightning protection material (16) on a negative mould (30) and then in at least some regions the automated laying down of the ribbon-form pre-preg material (10) or the dry ribbon-form reinforcing fibre strands onto the positioned lightning protection material (16), including regions of the negative mould (30) remaining free of the lightning protection material, and
b) the curing of the laminate construction formed with the pre-preg material (10) and with the lightning protection material (16) to form the fibre composite component,
or the infiltration of the dry reinforcing fibre strands with a plastic, in particular with a thermosetting plastic, and the subsequent curing of the laminate construction formed with the infiltrated reinforcing fibre strands and the lightning protection material to form the fibre composite component.

2. The method in accordance with Claim 1, **characterised in that**, a width of the pre-preg material (10) or the dry reinforcing fibre strands essentially corresponds to a width of the lightning protection material (16), wherein the width of the pre-preg material (10) or the dry reinforcing fibre strands and also that of the lightning protection material (16) lies between 1 mm and 100 mm.

3. The method in accordance with Claim 1 or 2, **characterised in that**, the laying down of the pre-preg material (10) and the dry reinforcing fibre strands, and also the lightning protection material (16), in each case is undertaken by means of the same laying machine (14).

4. The method in accordance with one of the Claims 1 to 3, **characterised in that**, the pre-preg material (10) is formed with a carbon fibre-reinforced, thermosetting plastic and the essentially dry reinforcing fibre strands are formed with carbon fibres.

5. The method in accordance with one of the Claims 1 to 4, **characterised in that**, the ribbon-form lightning protection material (16) is formed with at least one metal strip, in particular with at least one copper strip, of low material thickness, embedded in a resin.

6. A fibre composite component with integrated lightning protection (20), in particular manufactured in accordance with the method in accordance with at least one of the Claims 1 to 5, **characterised in that**, the lightning protection (20) is built up with a ribbon-form lightning protection material (16).

7. The fibre composite component in accordance with Claim 6, **characterised in that**, the ribbon-form lightning protection material (16) is formed with at least one metal strip, in particular with at least one copper strip, of low material thickness, embedded in a resin.

8. The fibre composite component in accordance with Claim 6 or 7, **characterised in that**, the at least one metal strip has a width of between 1 mm and 100 mm.

9. The fibre composite component in accordance with one of the Claims 6 to 8, **characterised in that**, the metal strips in at least some regions run in parallel spaced apart, abutting one another, and/or overlapping one another.
